(19) Europäisches Patentamt

European Patent Office

Office européen des brevets

(11) **EP 3 680 607 A1**

(12) **EUROPEAN PATENT APPLICATION**

(43) Date of publication:
**15.07.2020 Bulletin 2020/29**

(21) Application number: **19216655.1**

(22) Date of filing: **16.12.2019**

(51) Int Cl.:
**G01B 11/30** *(2006.01)*  **G01B 11/25** *(2006.01)*
**G01B 11/24** *(2006.01)*  **G06T 7/41** *(2017.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2019  GB 201900225**

(71) Applicant: **Rolls-Royce plc**
**London N1 9FX (GB)**

(72) Inventors:
• **Murukeshan, Vadakke Matham**
  **Derby, Derbyshire DE24 8BJ (GB)**

• **Prabhathan, Patinharekandy**
  **Derby, Derbyshire DE24 8BJ (GB)**
• **Haridas, Aswin**
  **Derby, Derbyshire DE24 8BJ (GB)**
• **Kapur, Pulkit**
  **Derby, Derbyshire DE24 8BJ (GB)**
• **Nasser, Bilal**
  **Derby, Derbyshire DE24 8BJ (GB)**
• **Chan, Kelvin**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **SURFACE ROUGHNESS MEASUREMENT**

(57)    A method of measuring the surface roughness of a component using an optical system comprising a tunable laser light source and a camera system. Positioning the component to be measured upon a mount in front of the optical system. Capturing a first image of the component at a first location at a first wavelength $\lambda_1$, and then capturing a second image of the component at the first location at a second wavelength $\lambda_2$. Determining the Speckle Statistical Correlation (SSC) coefficient of the first and second images. Plotting the SSC coefficient for the combined first and second images. Calculating the roughness parameters $R_a$ and $R_q$ from the SSC coefficient plot. Plotting a roughness map for the imaged surface from the calculated roughness parameters $R_a$ and $R_q$. Moving the optical system to a new location and repeating steps (b) to (f) at the new location, and repeating these steps until a desired area of the component has been imaged. Stitching the roughness maps for each location to form an overall roughness map for the desired area of the component.

Step 1 - mounting the component to be measured

Step 2 - capturing a first image of the component at a first location and at a first wavelength $\lambda_1$, then capturing a second image at the first location at a second wavelength $\lambda_2$

Step 3 - determining the SSC coefficient from the first and second images

Step 4 - plotting the SSC coefficient for the combined first and second images

Step 5 - calculating the roughness parameters $R_a$ and $R_q$ from the SSC coefficient plot

Step 6 - plotting the roughness map from the calculated roughness parameters

Step 7 - moving the optical system to a new location and imaging the component using steps 2 to 6, and repeating until a desired area of the component has been imaged

Step 8 - stitching the roughness maps for each position to form an overall roughness map for the desired area of the component

*FIG. 7*

## Description

### Field of the Disclosure

The present disclosure concerns a method for measuring the surface roughness of a component, especially a large flat or curved component such as a blade for a gas turbine engine.

### Background of the Disclosure

Measuring the surface roughness of a material is important for determining information regarding the performance of a component as well as being able to detect faults or issues in the formation of the components. Current design requirements of the aerospace industry of to improving quality, strength and load carrying of the components has resulted in the requirements for improved determination of faults. This will lead towards large area components having surface areas of over a few metres but with component or feature sizes on the micrometre scale. These requirements have also imposed stringent requirements on the metrology of the components. Consequently, the measurement techniques required for these components are exacting as they have to be able to fit in with the normal production of components as well as being able to detect any small defects.

Currently there are a number of ways of determining the surface roughness of a sample; however, these methodologies are typically suited to small surface area objects. These methodologies can be categorised into line profiling, areal profiling or areal integrating techniques. These methodologies have been widely employed in the aerospace industry to certify adherence to respective standards. These methodologies include moving a stylus across the surface, white light interferometry, speckle imaging and microscopy. These methods, however, are currently limited by their point-by-point data acquisition and small field of view. As such, there is a need to improve these methods to image large areas. However, all of these techniques are limited either by contamination, measurement speed or measurement field of view.

A way of overcoming these issues is to use optical techniques. In particular the use of lasers and speckle imaging needs further exploration. Laser speckle imaging exploits random scattering and interference of coherent light from a surface to determine if there are differences on the surface. Out of all the speckle based techniques, speckle correlation techniques for surface topology measurements have been investigated the most. Nevertheless, all of these measurement techniques have yet to overcome the issues of measuring large components. The issues for these to overcome are one or more of the speed, area and/or resolution of the techniques. As such, there is a need to improve the methodology to make it useful for the aerospace, and other industries that require high tolerances over large area components such as automotive, marine, nuclear and medical for example.

### Summary of the disclosure

According to a first aspect there is provided a method of measuring the surface roughness of a component using an optical system comprising a tunable laser light source and a camera system, the method comprising: (a) positioning the component to be measured upon a mount in front of the optical system; (b) capturing a first image of the component at a first location at a first wavelength $\lambda_1$, and then capturing a second image of the component at the first location at a second wavelength $\lambda_2$; (c) correlating the first and second images; (d) determining the Speckle Statistical Correlation (SSC) coefficient of the first and second images; (e) plotting the SSC coefficient for the combined first and second images ; (f) calculating the roughness parameters $R_a$ and $R_q$ from the SSC coefficient plot; (g) plotting a roughness map for the imaged surface from the calculated roughness parameters $R_a$ and $R_q$; (h) moving the optical system to a new location and repeating steps (b) to (g) at the new location, and repeating these steps until a desired area of the component has been imaged; and (i) stitching the roughness maps for each location to form an overall roughness map for the desired area of the component.

The disclosure is beneficial as it provides a non-contact, non-destructive surface roughness measurement at long distances. The method also reduces the overall measurement times of the component. It is also able to provide an accurate and repeatable measurement process that can easily be automated.

The first and second images may be cropped before correlating the images.

The roughness map may be created by averaging pixels.

The averaging may be done using ISO 25178.

The overall roughness map may be displayed to a user and saved for later reference.

The stitching performed in step 10 may be carried out by inputting an image size for the images and defining a stitching sequence, defining an overlap between the images to be stitched together, and merging the images according to the stitching sequence to form the overall roughness map.

The optical system may be mounted on automatic translation stages having 5 degrees of freedom.

The tunable laser light source may be coupled to an optical fibre for delivering the light for illuminating the surface of component.

The optical system may project structured light from the laser source onto the surface of the component.

The imaging system may comprise two cameras for stereoscopic imaging.

The component to be imaged may be part of a gas turbine engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

## Brief description of the drawings

Embodiments will now be described by way of example only, with reference to the Figures, in which:

**Figure 1** shows a component to be measured using a camera system in accordance with the method of the present disclosure;

**Figure 2a** is an embodiment of an optical system for use in the present disclosure; **Figure 2b** is an alternative embodiment of an optical system for use in the method of the present disclosure;

**Figure 3a** presents an alternative embodiment of a stereoscopic imaging system for use in the present disclosure, **Figure 3b** presents method steps required for using a stereoscopic imaging system;

**Figure 4a** presents an alternative embodiment of a structured light projecting system for use in the present disclosure, **Figure 4b** presents method steps required for using the structured light projecting system;

**Figures 5a-e** present an example of combining the speckle imaging of a sample;

**Figure 6** is a flow chart of an optional stitching technique for use in combining the images of the present disclosure;

**Figure 7** presents a flow chart for the method of the present disclosure.

**Figure 8** shows the embodiment presented in Figure 2b tested for surface roughness measurement of an object 450 mm x 210 mm in size measured using the method of the present disclosure.

## Detailed description

Aspects and embodiments of the present disclosure will now be discussed with reference to the accompanying drawings. Further aspects and embodiments will be apparent to those skilled in the art.

As outlined above, the use of speckle imaging for determining surface roughness is known. The technique utilises a coherent light, such as that produced by a laser, to illuminate a surface. The incident light scatters from the surface of an object and randomly interferes such that when the reflected light is imaged it produces a series of bright and dark patterns - it is these patterns that are termed as speckles. A second image can then be taken, with the speckle size modified by the wavelength of light or an adjustment to the speckle size. This works because Spectral Speckle Correlation (SSC), i.e. the correlation of two speckle images, exploits the relationship between the wavelength of the illumination source used and the size of the individual speckle. This is calculated by determining the speckle statistics from the two images which have been correlated. The conditions required for correlating the two consecutive speckle patterns are: (a) the Root Mean Square (RMS) of the surface roughness is greater than the wavelength of the coherent light source; (b) the image forms fully developed speckles (contrast equals 1) and that the surface height probability is Gaussian; and (c) the image is formed by an isotropic and homogeneous material whereby shadowing, multiple reflections and volume scattering are neglected. The theoretical equation governing the relationship between the correlation coefficient (SSC) and the RMS surface roughness ($R_q$) can be written as:

$$SSC = exp\left(-\left(\frac{4\pi\Delta\lambda}{\lambda_1\lambda_2}R_q\cos\theta\right)^2\right) \quad \text{(Equation 1)}$$

Wherein $\lambda_1$ and $\lambda_2$ are the illumination wavelengths used to obtain the speckle images. $\Delta\lambda$ is the difference between the illumination wavelengths $\lambda_1$ and $\lambda_2$. $\theta$ is the angle of illumination, which is equal to the angle of observation. Additionally, assuming the surface under test has a Gaussian distribution $R_q$ can be related to the average roughness $R_a$ by the following.

$$R_a = \sqrt{\frac{2}{\pi}}R_q \quad \text{(Equation 2)}$$

Consequently, from this the average roughness of a workpiece can be determined.

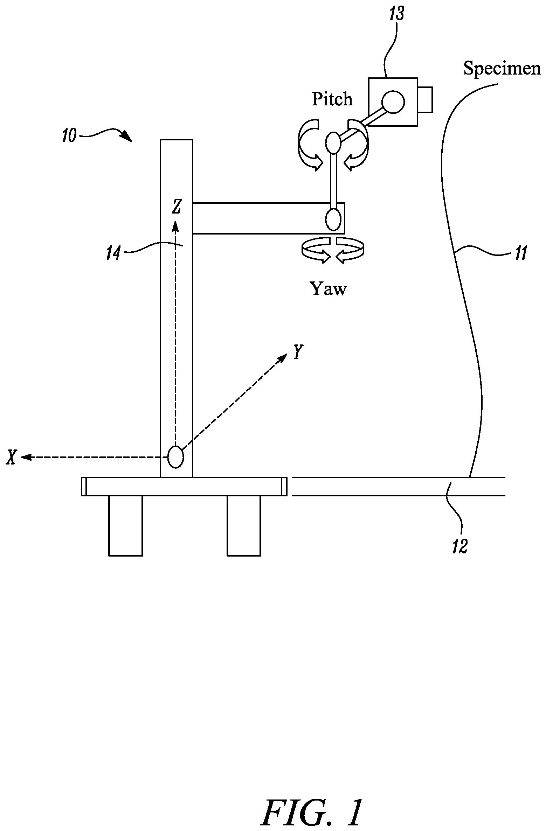

An example of a camera system 10 to be used for large area measurements is shown in **Figure 1**. Here the specimen 11 is mounted on a stage 12. The imaging device/camera 13 is then mounted on a translation stage 14 having 5 degrees of freedom. This allows the camera 13 to move in pitch and yaw as well as in the x,y and z directions. An alternative to this would be for the camera to be fixed and for the sample to move relative to the camera with the same degrees of freedom. With the camera system able to move with its 5 degrees of freedom the observation angle can be adjusted to image the entire workpiece.

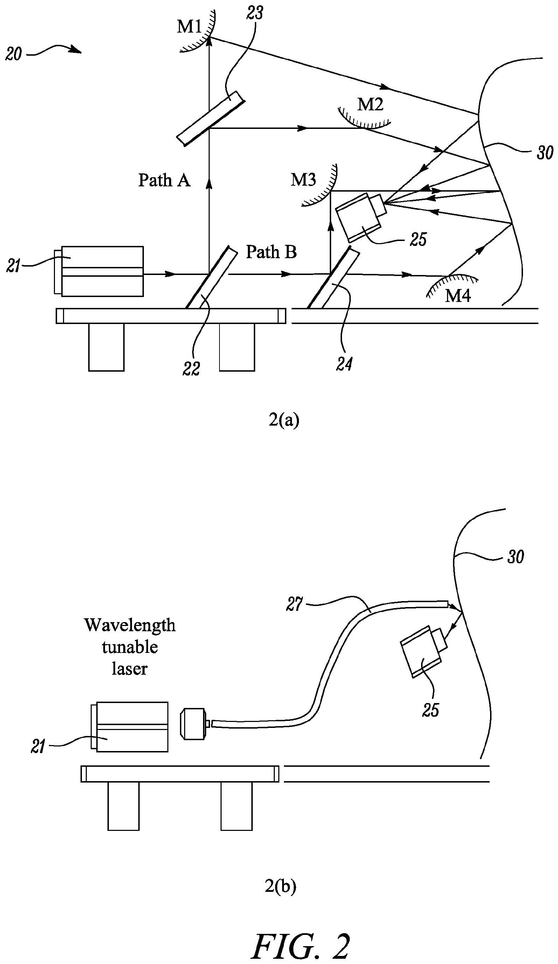

There are a number of options for illuminating the sample. The requirement for the light to be coherent means that a laser system must be employed. However, the choice of light source can be any suitable laser or light source with a large degree of coherence. In the example shown in **Figures 2a and 2b** a wavelength tunable laser is used this can be an argon laser (others HeNe, dye, $CO_2$ and diode lasers for example). **Figure 2a** shows an example of the optical setup 20 suitable for performing the method of the disclosure. In the optical setup the output from the laser can be directed onto the sample using beam splitters and mirrors to produce a large illumination area. In the figure, which is an example only, the light from the laser is directed to a first angled beam splitter 22, this allows 50% of the light to be reflected along path A and the remaining 50% to travel along path B. The light along path A is directed onto a second angled beam splitter 23, which again splits the light directing half to mirror M1 and half to mirror M2. Mirrors M1 and M2 direct this portion of light onto the workpiece 30 to be imaged. The light travelling along path B is directed to a third beam splitter 24 which directs the light along this path to Mirrors M3 and M4. These in turn, like mirrors M1 and M2, direct the light to separate points on the sample surface. The light reflected from the workpiece is collected and imaged by camera 25. It is desirable that the intensity of the beams down the two paths are equal so that the intensity resulting from the scattering will be equivalent across the imaged surface. The person skilled in the art would appreciate that there are a large number of variations of optical components which could achieve similar illumination profiles. The angle of the illumination light to the angle of the camera can be set to any suitable value. This for example, could be where the angle of illumination is equal to the angle of reflection. However, these can be varied relative to each other. For curved surfaces other angles may be desirable.

A second alternative optical illumination system is presented in **Figure 2b**. Here the light emitted the laser 21 is coupled in an optical fibre 27 before being directed to the surface of the workpiece 30. The reflected light from this is then captured by camera 25. The example shows the use of only a single optical fibre. However, it will be appreciated if the beam can be split along the optical fibre to produce more than one illumination point.

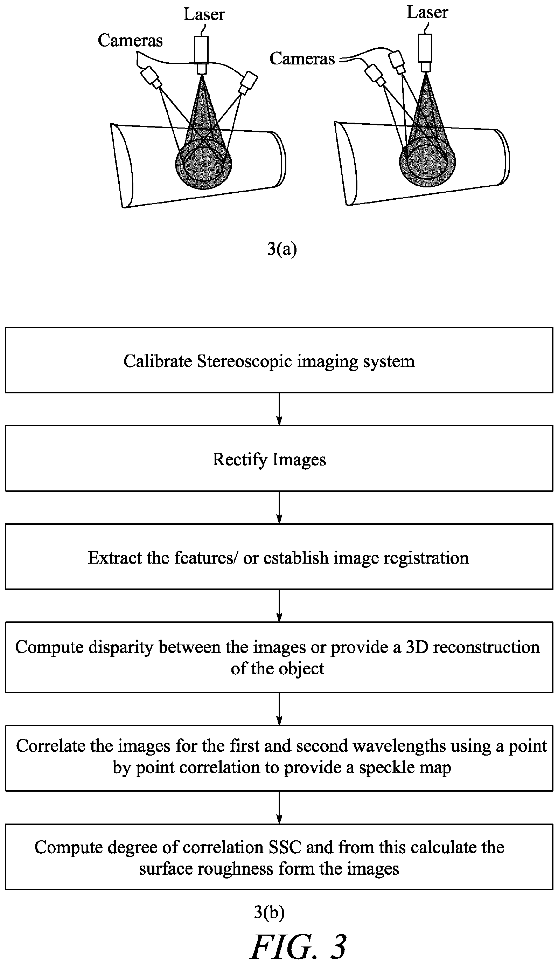

A further alternative optical set up is to project structured light onto the surface of the object to be imaged. Structured light is a process of projecting a known pattern onto the object with the way that this pattern deforms from the reflection off a surface allows the vision system to calculate depth and surface information of the formations on the surface of the object to be determined. For the system the structured light needs to be applied at two different wavelengths $\lambda_1$ and $\lambda_2$. An example of an imaging setup using structured light is shown in **Figure 3a.** The processing steps for this technique are shown in **Figure 3b.** The first step 301 is a calibration of the stereoscopic imaging system. This is done by calibrating both the light projector and the camera. The second step 302 is to rectify the images. This is done by using the projector to project the fringe patterns from the laser system, so that the light has features. This is done at both $\lambda_1$ and $\lambda_2$ in order to produce the two requisite images for the SSC correlation. The third step 303 of extracting the features or establishing image registration can be done in one of two ways. The first option is to use phase wrap/unwrap which is a technique used to segment the phase map and to reduce the discontinuities in the phase calculation between adjacent pixels. The second option is to use pattern recognition and triangulation of points on the stripes. Typically to use such technique is to combine binary grey codes, Fast Fourier Transform (FFT) and pattern recognition for the 3D reconstruction of the imaged object. This allows for the two images to be correlated and combined. From the two images a depth map of the imaged surface can be created, which is done in the fourth step 304. This step allows the operator to compute a disparity between the images or provides a 3D reconstruction of the object. The fifth step 305 correlates the images for the first and second wavelengths using a point by point correlation to provide a speckle map. This allows the operator to produce a point by point correlation of $\lambda_1$ and $\lambda_2$ images to produce the speckle maps. With the speckle images for the point reproduced the SSC correlation for each area imaged can be created and the surface roughness $R_q$ determined in the sixth step 306. This is done through computing the degree of SSC correlation and from this calculating the surface roughness from the images.

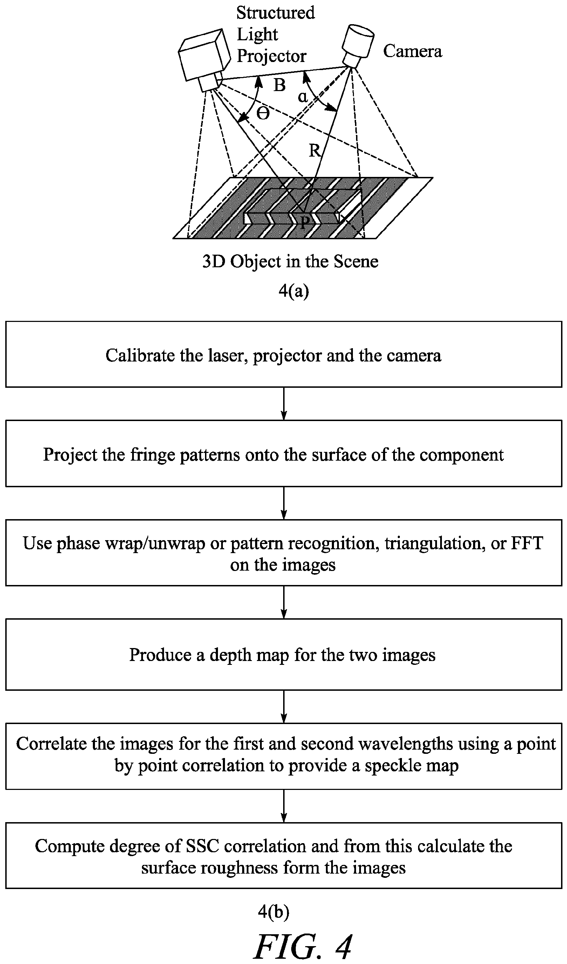

An alternative to the above set up and process is shown in **Figure 4**. In this, rather than using multiple illumination points the system then uses two cameras to capture a stereovision image of the surface. In order to use such a system the laser illumination spot is expanded to create a large area spot on the surface of the object. Then relative to the spot the cameras can be positioned at the desired point relative to the illumination spot. An example of this is shown in **Figure 4a.** In doing this both of the cameras can be mounted onto separate 5 degree of freedom movement stages, such that the cameras can be moved and positioned as desired. To obtain desirable results in this case the beam needs to be expanded to a desirable size this can be done using any suitable means. The illumination spot size may be any suitable size. This spot size will be dependent upon the shape and size of the object or the desired power and intensity required for the laser spot. With the optical set up created the images need to be resolved and the process to obtain the SSC parameters in order to obtain the RMS surface roughness $R_q$. This process is set out in **Figure 4b.** The first step 401 is to calibrate the stereo system. This involves calibrating the laser, the projector and the camera. The second step 402 projects the fringe patterns onto the surface of the component. This allows the operator to obtain the images and to rectify these. This is done at two different wavelengths of light using a tunable laser. With the obtained images at different wavelengths the surface features can be extracted and recorded in the third step 403. The third step uses a phase wrap/unwrap or pattern recognition, triangulation, or FFT on the images. The fourth step 404 is to produce a depth map for the two images. This uses the two images to calculate any disparities and forms a 3D reconstruction of the images. With the 3D reconstruction and the two images being linked to the same position on the surface, a correlation between the two images can be obtained for the images obtained at the two different wavelengths. This allows for a point by point correlation of the images at $\lambda_1$ and $\lambda_2$ to form a speckle image for the object from the two cameras with 3D information in the fifth step 405. In this step, co-registration techniques can also be used to correlate the corresponding point clouds, such as Iterative Closest Point (ICP), PROCRUSTES etc. An optional step that can be used to improve the quality of the images is to use an interpolation technique on the point cloud; this technique may be a Nearest Neighbour (NN), or moving Plane (MP). From the figures and their associated point clouds the SSC correlation and the RMS surface roughness $R_q$ can be plotted as the sixth step 406. This is done by computing a degree of SSC correlation and from this calculate the surface roughness from the images. Following the first four steps allows for a calibrated 3D map of the inspected surface to be produced. In order to produce high quality images using this option to obtain the images is finding clear features of the surface of the object in order to obtain good registration between the two images.

The camera used for these different optical systems can be any suitable camera system such as Charge Coupled Device (CCD) or alternatively Complementary Metal Oxide on Silicon (CMOS) could be used.

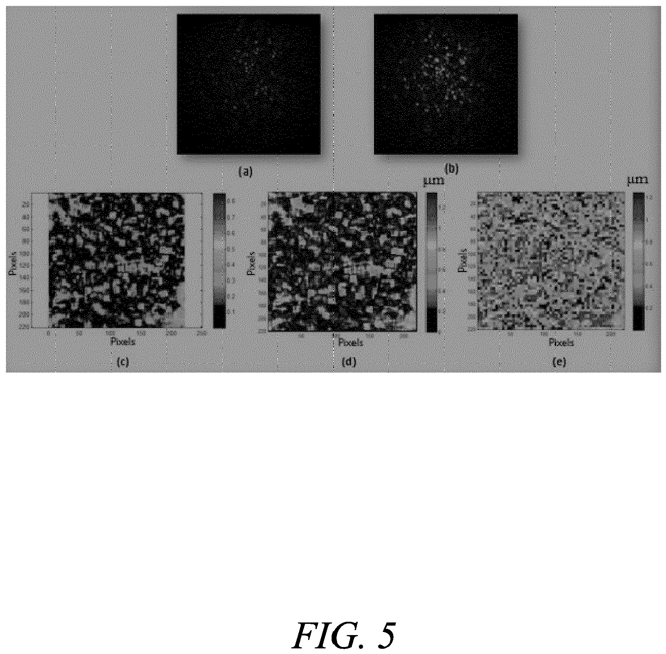

The image obtained from the optical system then needs to be processed to determine the surface roughness for the sample for the particular illumination point. Image processing is used to convert the output from each of the camera pixels to obtain the SSC values. To process this, the images captured at $\lambda_1$ and $\lambda_2$ are correlated using appropriate software. This for example could be created in MATLAB™ modelling software or other suitable processing software. Example images of the steps of this process is shown in **Figure 5**. This figure presents an example correlation of an image obtained using the optical system presented in Figure 2b. Figures 5a and 5b show an example of the image obtained by the system at wavelengths $\lambda_1$ and $\lambda_2$, respectively. A correlation plot is then determined as shown 5c; this utilises an intensity correlation of the speckle images through a pixel-pixel correlation. From this, the SSC plot is converted into a surface roughness plot using equations 1 and 2 as shown in Figure 5d. A final step is then to sub-sample the plot using the camera calibration parameters, as each pixel on the camera corresponds to a specific area on the sample. By setting these calibration parameters an evaluation length, which is done in pixels, is chosen based on ISO standard 25178 part 6. This standard relates to Geometric Product Specifications (GPS) - surface texture areal, with part 6 relating to the classification of methods for measuring the surface texture. This final processing step is shown in Figure 5e, in this example the evaluation length was set to 4 pixels.

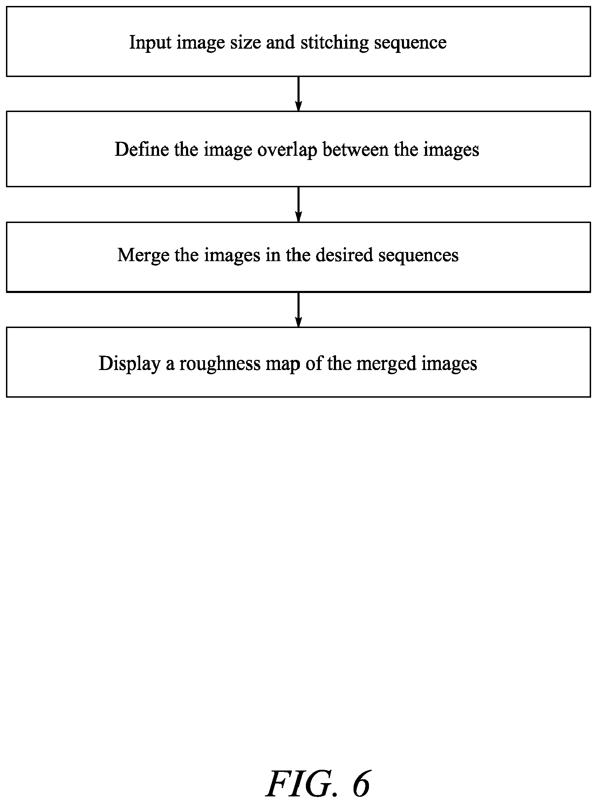

In order to achieve large area processing with high accuracy the process must be repeated on different points on the sample. To image accurately in this way the separate images must have an overlap in the imaged sample area. This overlap allows the images to be stitched together, such that multiple smaller images can be used to produce an image of a much larger object. For example, the overlap may be 50% of the image, or 45%, 40%, 35%, 30%, 25%, 20%, or 15% of the image. The processing of the stitching is set out in **Figure 6**. In the first step 601 the images are input into the system along with information regarding the size of the area that the image covers. This is input along with the desired stitching sequence. This will vary depending upon the number of images that are being stitched together to form the final image. With the stitching order determined, the second step 602 defines the image overlap between the images. This allows the operator to set the level of overlap between the images. As discussed above, this can be any suitable value and will depend on the accuracy required in the final image. With the parameters input for the first two steps, the third step 603 merges the images in the desired stitching sequences. The fourth step 604 displays a final output from the merged image to display a roughness map that is larger than that of the original input images. In doing so the high-resolution surface roughness plots for large scale objects can be obtained by keeping the similar experimental parameters.

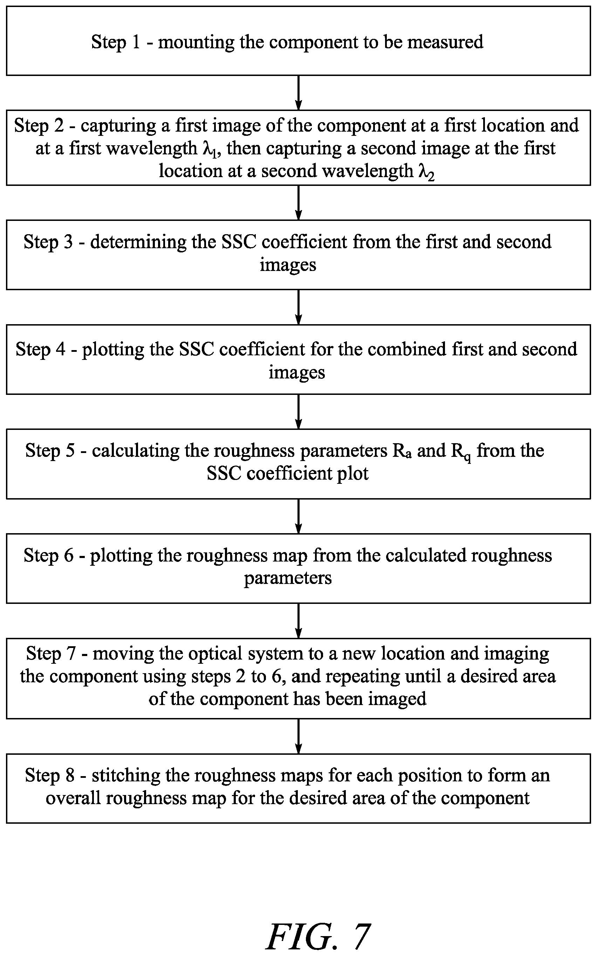

The processing steps that can be used to produce an image for a large scale object are set out in **Figure 7.** Step 1 701 mounts the component to be measured on a stage. Calibration of the system may then be performed at the home location. This ensures that the system is in position to start the imaging and that all the translation stages are in their correct position for imaging. Depending upon the types of objects to be imaged the calibration point for different objects may be different depending upon the requirements of the system. Step 2 702 moves the equipment to a first location to be imaged. Depending upon the object to be imaged, the position of the first image may be selectively chosen, this could be either in the direct centre or towards a desired edge of corner. With the optical equipment in the first imaging location an image is captured at the first wavelength $\lambda_1$ to produce image A. The system then captures an image at the same location as that of image A, but this time at a different wavelength $\lambda_2$ to produce image B. With the two images acquired these may then be cropped for their correlation processing. Cropping is used to restrict the image to only the pixels of interest. This can either be a user defined crop or the crop can be automatically fixed around the centre of the image. In step 3 703 the SSC coefficient is determined for the first and second images, obtained in step 2. The SSC coefficient is determined using Equation 1 and plotted for the cropped area images. Step 4 704 plots the SSC coefficient for the combined images. Step 5 705 utilises the SSC coefficient plot to determine the $R_q$ and $R_a$ roughness parameters. Step 6 706 plots a roughness map from the calculated roughness parameters. This step may be done using pixel averaging based upon the ISO standard 25178 or with any other suitable means. The roughness map may then also be saved for the first position is saved in a designated folder. The scanning then moves onto the next location in step 7 707 and repeats Steps 2-6 at one or more locations, until the scanning is complete. The scanning is complete when the desired area of the component has been imaged. With all the scanning complete the images can be stitched together to form a roughness map for the overall object in step 8 708. An additional step may be included which displays this image and saves the output to the designated folder. After this the imaging process comes to an end.

If the area imaged is larger than a single image then stitching of the images needs to be performed to produce a larger imaging result. The multiple images need to be stitched together prior to processing the surface roughness calculation. One way to achieve the accurate stitching together of the images is to have external inputs that illustrate the camera or inspected-object position and orientation for each capture. If using the 3D imaging system of Figures 3 and 4 a transformation matrix can then be derived and applied on each depth map to align it together. This is similar to the approach that is used when 2D images are stitched together. Other techniques that can be used would be apparent to the skilled person in the art. Some of the other techniques involving computation may be more complex, as the object surface may not have distinguishable features to register. In these cases, physical or optical markers can be applied to the surface of the imaged object and used as markers to register and align multiple images. If texture projection is used as part of the structured light system of figure 4, a surface registration technique such as ICP may be used to align the images. If the object has features already present on the surface or there are faults such as cracks then 2D feature extraction and matching methods such as SIFT and FAST can be used to determine the transformation matrix between the different captures and align the point cloud scenes.

The area covered in each image from the camera can be any suitable size, providing that there is enough resolution to be able to determine the surface roughness of the workpiece that is being imaged. For example, the images may be under 100 mm x 100 mm. There is no restriction on the images being square they may also be able rectangular and could be any in any suitable aspect ratio, as will be appreciated by the person skilled in the art. The number of images that are required to stitch the images together to form a full-scale image of the component will depend upon the size of the object, the size of the initial images and the amount of overlap used for each of the images.

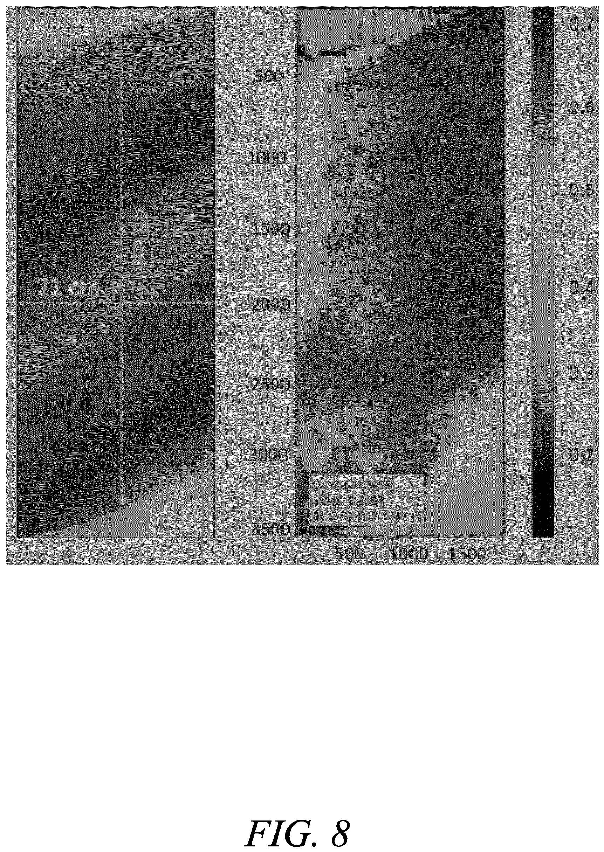

An example embodiment was tested for imaging an object 450 mm x 210 mm is shown in **Figure 8**. In order to capture this image, a fibre illumination technique was used, similar to that shown in Figure 2b. The fibre illumination system coupled to an argon laser operating at 488 nm for $\lambda_1$ and 514.5 nm for $\lambda_2$ and the camera being similar to a probe head were scanned across the large area to obtain the speckle images. Each frame corresponded to an area of 60 mm x 45 mm at a working distance of 160 mm. All of the images were stitched together having an overlap of 50%. The imaging system was automated and performed the entire image capture through a predefined trajectory to obtain all the images required by the imaging system. A stitching algorithm was used as performing the method as set out in Figure 6.

It will be understood that the invention is not limited to the embodiments above-described and various modifications and improvements can be made without departing from the concepts described herein with the scope of the following claims. Except where mutually exclusive, any of the features may be employed separately or in combination with any other features and the disclosure extends to and includes all combinations and sub-combinations of one or more features described herein.

**Claims**

1. A method of measuring the surface roughness of a component using an optical system comprising a tunable laser light source and a camera system, the method comprising:

   (a) positioning the component to be measured upon a mount in front of the optical system;
   (b) capturing a first image of the component at a first location at a first wavelength $\lambda_1$, and then capturing a second image of the component at the first location at a second wavelength $\lambda_2$;
   (c) determining the Speckle Statistical Correlation (SSC) coefficient of the first and second images;
   (d) plotting the SSC coefficient for the combined first and second images;
   (e) calculating the roughness parameters $R_a$ and $R_q$ from the SSC coefficient plot;
   (f) plotting a roughness map for the imaged surface from the calculated roughness parameters $R_a$ and $R_q$;
   (g) moving the optical system to a new location and repeating steps (b) to (f) at the new location, and repeating these steps until a desired area of the component has been imaged; and

(h) stitching the roughness maps for each location to form an overall roughness map for the desired area of the component.

2. The method as claimed in claim 1, wherein the first and second images are cropped before correlating the images.

3. The method as claimed in claim 1 or 2, wherein the roughness map is created by averaging pixels.

4. The method as claimed in any preceding claim, wherein the overall roughness map is displayed to a user and saved for later reference.

5. The method as claimed in any preceding claim, wherein the stitching performed in step 10 is carried out by inputting an image size for the images and defining a stitching sequence, defining an overlap between the images to be stitched together, and merging the images according to the stitching sequence to form the overall roughness map.

6. The method as claimed in any preceding claim, wherein the optical system is mounted on automatic translation stages having 5 degrees of freedom.

7. The method as claimed in any preceding claim, wherein the tunable laser light source is coupled to an optical fibre for delivering the light for illuminating the surface of component.

8. The method as claimed in any preceding claim, wherein the optical system projects structured light from the laser source onto the surface of the component for the illumination of the component being imaged.

9. The method as claimed in any preceding claim, wherein the optical system comprises two cameras for stereoscopic imaging.

10. The method as claimed in any preceding claim, wherein the component to be imaged is part of a gas turbine engine.

11. A blade for a gas turbine engine having its surface roughness measured by the method of any preceding claim.

*FIG. 1*

20

M1 23

Path A

M2

M3

Path B

M4

30

21

25

22 24

2(a)

Wavelength
tunable
laser

30

27

25

21

2(b)

*FIG. 2*

Laser

Cameras

Laser

Cameras

3(a)

| Calibrate Stereoscopic imaging system |
| :---: |

↓

| Rectify Images |
| :---: |

↓

| Extract the features/ or establish image registration |
| :---: |

↓

| Compute disparity between the images or provide a 3D reconstruction of the object |
| :---: |

↓

| Correlate the images for the first and second wavelengths using a point by point correlation to provide a speckle map |
| :---: |

↓

| Compute degree of correlation SSC and from this calculate the surface roughness form the images |
| :---: |

3(b)

# FIG. 3

Structured
Light
Projector                Camera

B
α
Θ

R

P

3D Object in the Scene

4(a)

| Calibrate the laser, projector and the camera |
| --- |

| Project the fringe patterns onto the surface of the component |
| --- |

| Use phase wrap/unwrap or pattern recognition, triangulation, or FFT on the images |
| --- |

| Produce a depth map for the two images |
| --- |

| Correlate the images for the first and second wavelengths using a point by point correlation to provide a speckle map |
| --- |

| Compute degree of SSC correlation and from this calculate the surface roughness form the images |
| --- |

4(b)

*FIG. 4*

FIG. 5

Input image size and stitching sequence

Define the image overlap between the images

Merge the images in the desired sequences

Display a roughness map of the merged images

*FIG. 6*

Step 1 - mounting the component to be measured

Step 2 - capturing a first image of the component at a first location and at a first wavelength $\lambda_1$, then capturing a second image at the first location at a second wavelength $\lambda_2$

Step 3 - determining the SSC coefficient from the first and second images

Step 4 - plotting the SSC coefficient for the combined first and second images

Step 5 - calculating the roughness parameters $R_a$ and $R_q$ from the SSC coefficient plot

Step 6 - plotting the roughness map from the calculated roughness parameters

Step 7 - moving the optical system to a new location and imaging the component using steps 2 to 6, and repeating until a desired area of the component has been imaged

Step 8 - stitching the roughness maps for each position to form an overall roughness map for the desired area of the component

# FIG. 7

*FIG. 8*

Europäisches
Patentamt
European
Patent Office
Office européen
des brevets

# EUROPEAN SEARCH REPORT

Application Number

EP 19 21 6655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/049779 A1 (TIN SIU-KEI [US] ET AL) 20 February 2014 (2014-02-20) * abstract; figures 1A-1C * * paragraph [0024] - paragraphs [0035], [0043], [0078] * | 1-10 | INV. G01B11/30 G01B11/25 G01B11/24 G06T7/41 |
| A | ULF PERSSON: "Measurement of surface roughness on rough machined surfaces using spectral speckle correlation and image analysis", WEAR, vol. 160, no. 2, 1 February 1993 (1993-02-01), pages 221-225, XP55693346, CH ISSN: 0043-1648, DOI: 10.1016/0043-1648(93)90424-K * the whole document * | 1-10 | |
| A | PRABHATHAN P ET AL: "Experimental investigations and parametric studies of surface roughness measurements using spectrally correlated speckle images", PROCEEDINGS OF SPIE; [PROCEEDINGS OF SPIE ISSN 0277-786X VOLUME 10524], SPIE, US, vol. 10449, 13 June 2017 (2017-06-13), pages 1044913-1044913, XP060093443, DOI: 10.1117/12.2270539 ISBN: 978-1-5106-1533-5 * the whole document * | 1-10 | TECHNICAL FIELDS SEARCHED (IPC) G01B G06T |

-/--

The present search report has been drawn up for all claims

| Place of search | Date of completion of the search | Examiner |
|---|---|---|
| Munich | 14 May 2020 | Stanciu, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 21 6655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J. KÜHN ET AL.: "Fast non-contact surface roughness measurements up the micrometer range by dual-wavelength digital holographic microscopy", SPIE, PO BOX 10 BELLINGHAM WA 98227-0010 USA, vol. 7718, 14 May 2010 (2010-05-14), pages 771805-1-771805-8, XP040523909, DOI: https://doi.org/10.1117/12.854550 * the whole document * | 1-10 | |
| X | EP 1 284 337 A1 (ALSTOM SWITZERLAND LTD [CH]) 19 February 2003 (2003-02-19) * the whole document * | 11 | |

TECHNICAL FIELDS
SEARCHED      (IPC)

The present search report has been drawn up for all claims

| Place of search | Date of completion of the search | Examiner |
|---|---|---|
| Munich | 14 May 2020 | Stanciu, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 19 21 6655

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2020

| Patent document cited in search report | Publication date | Patent family member(s) | Publication date |
|---|---|---|---|
| US 2014049779 A1 | 20-02-2014 | US 2014049779 A1<br>WO 2014031411 A1 | 20-02-2014<br>27-02-2014 |
| EP 1284337 A1 | 19-02-2003 | DE 50202696 D1<br>EP 1284337 A1<br>US 2003035968 A1 | 12-05-2005<br>19-02-2003<br>20-02-2003 |

EPO FORM P0459

For more details about this annex : see Official Journal of the European Patent Office, No. 12/82